# EUROPÄISCHE PATENTSCHRIFT

(11) **EP 3 887 195 B1**
(45) Veröffentlichungstag und Bekanntmachung des Hinweises auf die Patenterteilung: **04.01.2023**
(21) Anmeldenummer: 19805134.4
(22) Anmeldetag: 24.10.2019
(51) Int. Cl.: B60M 3/04, B60M 7/00, B60L 5/36

(54) **ANLAGE MIT ELEKTRISCHEM VERBRAUCHER**
SYSTEM HAVING AN ELECTRIC CONSUMER
INSTALLATION ÉQUIPÉE D'UN CONSOMMATEUR ÉLECTRIQUE

(30) Priorität: 29.11.2018 DE 102018009349
(43) Veröffentlichungstag der Anmeldung: 06.10.2021
(73) Patentinhaber: SEW-EURODRIVE GmbH & Co. KG, 76646 Bruchsal (DE)
(72) Erfinder: HENKEL, Rico, 68794 Oberhausen-Rheinhausen (DE); BUND, Martin, 76139 Karlsruhe (DE); EPP, Mario, 69245 Bammental (DE); HIEN, Stefan, 67346 Speyer (DE)
(74) Vertreter: Tüngler, Eberhard
(86) Internationale Anmeldenummer: PCT/EP2019/025363
(87) Internationale Veröffentlichungsnummer: WO 2020/108795

(56) Entgegenhaltungen:
- EP-A1- 2 773 001
- WO-A1-2018/086820
- DE-A1-102014 013 500
- DE-A1-102017 008 381

## Beschreibung

Die Erfindung betrifft eine Anlage mit elektrischem Verbraucher.

Es ist allgemein bekannt, dass Schienenfahrzeuge mittels Schleifleitungen elektrisch versorgbar sind.

**Aus der** DE 10 2014 013 500 A1 **ist als nächstliegender Stand der Technik eine Förderanlage mit Sicherheitsfunktion bekannt.**

**Aus der** DE 10 2017 008 381 A1 **ist eine mittels Schleifleitung versorgtes Fahrzeug eines Schienensystems bekannt.**

**Aus der** EP 2 773 001 A1 **ist eine Einrichtung für elektrische Sicherheit bekannt. Aus der** WO 2018 086 820 A1 **ist ein Verfahren zum Speisen von wenigstens einer einphasigen Versorgungsleitung bekannt.**

Der Erfindung liegt daher die Aufgabe zugrunde, die Sicherheit bei einer Anlage mit elektrischem Verbraucher in einfacher Weise weiterzubilden.

Erfindungsgemäß wird die Aufgabe mit den in Anspruch 1 angegebenen Merkmalen gelöst.

Merkmale der erfindungsgemäßen Anlage sind, dass die Anlage mit elektrischem Verbraucher vorgesehen ist, insbesondere mit Antrieb, insbesondere mit wechselrichtergespeistem Elektromotor,
wobei die Anlage ein Elektrogerät mit Schaltvorrichtung und Leitungen, insbesondere Schleifleitungen, aufweist,
wobei eine erste der Leitungen im Normalbetrieb für das Führen der ersten Phase einer Drehspannung vorgesehen ist,
wobei eine zweite der Leitungen eine zweite Phase der Drehspannung führt,
wobei eine dritte der Leitungen eine dritte Phase der Drehspannung führt,
wobei der Verbraucher aus den Leitungen im Normalbetrieb mit Drehspannung versorgbar ist,
wobei die Schaltvorrichtung derart geeignet ausgeführt ist, dass
   - im Normalbetrieb die erste Leitung mit der ersten Phase der Drehspannung verbunden ist und
   - dass im Sicherheitsfall die erste Leitung von der ersten Phase der Drehspannung abgetrennt und mit der zweiten Phase der Drehspannung verbunden wird oder ist.

Von Vorteil ist dabei, dass auch im Sicherheitsfall eine Stromversorgung für die Signalelektronik des Verbrauchers bereitgestellt ist. Denn im Sicherheitsfall wird nur eine der drei Phasen der Drehspannungsversorgung abgetrennt und die für diese Phase im Normalbetrieb vorgesehene Leitung mit einer anderen der Leitungen verbunden. Auf diese Weise wird die Leistungsversorgung für den Verbraucher vermindert. Außerdem wird dem Mobilteil keine Drehspannung mehr zur Verfügung gestellt.

Weiterhin kann bei einer Schienenanlage mit Schienenabschnitten und Mobilteil ein jeweiliger Schienenabschnitt ein Elektrogerät mit Schaltvorrichtung eine Schiene und parallel dazu angeordnete Schleifleitungen aufweisen,
wobei eine erste der Schleifleitungen im Normalbetrieb für das Führen der ersten Phase einer Drehspannung vorgesehen ist,
wobei eine zweite der Schleifleitungen eine zweite Phase der Drehspannung führt,
wobei eine dritte der Schleifleitungen eine dritte Phase der Drehspannung führt,
wobei das Mobilteil Schleifabnehmer aufweist, so dass ein Antrieb, insbesondere ein von einem Wechselrichter gespeisten Elektromotor, des Mobilteils aus den Schleifleitungen im Normalbetrieb mit Drehspannung versorgbar ist,
wobei die Schaltvorrichtung derart geeignet ausgeführt ist, dass
   - im Normalbetrieb die erste Schleifleitung mit der ersten Phase der Drehspannung verbunden ist und
   - dass im Sicherheitsfall die erste Schleifleitung von der ersten Phase der Drehspannung abgetrennt und mit der zweiten Phase der Drehspannung verbunden wird oder ist.

Von Vorteil ist dabei, dass auch im Sicherheitsfall eine Stromversorgung für die Signalelektronik des Mobilteils bereitgestellt ist. Denn im Sicherheitsfall wird nur eine der drei Phasen der Drehspannungsversorgung abgetrennt und die für diese Phase im Normalbetrieb vorgesehene Schleifleitung mit einer anderen der Schleifleitungen verbunden. Auf diese Weise wird die Leistungsversorgung für den Antrieb des Mobilteils vermindert. Außerdem wird dem Mobilteil keine Drehspannung mehr zur Verfügung gestellt. Daher würde ein als Antrieb fungierender, direkt mit der Drehspannung versorgter Drehstrommotor des Mobilteils im Sicherheitsfall kein Drehmoment mehr erzeugen, da auch kein Drehfeld mehr vom Stator dieses Drehstrommotors dem Rotor bereitstellbar wäre. Wenn der Drehstrommotor jedoch aus einem Wechselrichter gespeist wird, der im Normalbetrieb aus der Drehspannung versorgt wird, wäre im Sicherheitsfall ein geringfügiges Drehmoment noch bereit stellbar, Allerdings wird im Sicherheitsfalls von einem Sicherheitsschaltgerät des Mobilteils ein Freigabesignal weggenommen, insbesondere gesperrt, und somit der Signalelektronik des Wechselrichters ein Abschaltsignal übermittelt, so dass dann auch die Leistungselektronik des Wechselrichters abgeschaltet wird und somit dem Motor keine Drehspannung mehr vom Wechselrichter bereit gestellt wird.

Somit ist die Sicherheit erhöht. Insbesondere beim Betätigen eines Notschalters wird also der Sicherheitsfall bewirkt, wobei ein Abschalten des Antriebs des Mobilteils ausgeführt wird.

Zusätzlich ist der Antrieb mit einer elektromagnetisch betätigbaren Bremse ausstattbar, die im Sicherheitsfall einfällt, da die Stromversorgung einer Spule der Bremse abgeschaltet wird und/oder ausfällt, weil die Spule der Bremse aus der zwischen den ersten und zweiten Schleifleiter bestehenden Spannung versorgt wird, welche im Sicherheitsfall einen verschwindenden Wert annimmt.

Bei einer vorteilhaften Ausgestaltung weist die Schaltvorrichtung zwei Schütze mit in Reihe geschalteten Umschaltkontakten auf, insbesondere wobei die Steuerspulen der beiden Schütze parallelgeschaltet sind,
insbesondere wobei der Umschaltkontakt des zweiten Schützes entweder die erste Phase oder die zweite Phase der Drehspannung mit einer elektrischen Leitung verbindet und der Umschaltkontakt des ersten Schützes entweder die zweite Phase oder diese elektrische Leitung mit der ersten Schleifleitung verbindet. Von Vorteil ist dabei, dass das elektrische Verbinden des ersten Schleifleiters mit der zweiten Phase der Drehspannung nur ermöglicht ist, wenn beide Umschaltkontakte betätigt werden. Wenn nur einer der Umschaltkontakte betätigt wird, ist die erste Schleifleitung stromlos. Wenn die erste Schleifleitung mittels eines Widerstandes mit der zweiten Schleifleitung verbunden ist, wird im genannten Fall der Stromlosigkeit der ersten Schleifleitung deren Potential zur zweiten Phase hin abgesenkt. Dabei ist der Widerstand vorzugsweise kleiner als die Hälfte des Ohm'schen Widerstands der Steuerspule des dritten Schützes.

Bei einer vorteilhaften Ausgestaltung weist das Mobilteil eine Steuerung mit Sicherheitsschaltgerät auf,
wobei die Steuerung mit Sicherheitsschaltgerät von einem Gleichrichter versorgt wird, welcher aus der zwischen der zweiten und dritten Schleifleitung bestehenden Spannung versorgt wird, insbesondere also aus der zwischen der zweiten Phase und der dritten Phase bestehenden Spannung. Von Vorteil ist dabei, dass das Mobilteil selbsttätig in der Anlage verfahrbar ist und die Sicherheit erhöht ist.

Bei einer vorteilhaften Ausgestaltung ist zwischen den jeweiligen ersten Schleifleitungen der Schienenabschnitte ein jeweiliger Trennblock angeordnet,
insbesondere der von einer Überwachungseinheit nur dann mit Spannung versorgt wird, wenn die von der Überwachungseinheit an den jeweiligen ersten Schleifleitungen erfassten Spannungen zueinander gleich große Effektivwerte und/oder Spitzenwerte aufweisen. Von Vorteil ist dabei, dass jeder Schienenabschnitt eine separate Einspeisung aufweisen darf. Dies bedeutet, dass die Drehspannung aus dem öffentlichen Wechselstromversorgungsnetz jedem Schienenabschnitt separat zuführbar ist. Eine Überlastung jeweils einer der Einspeisungen ist somit vermeidbar.

Bei einer vorteilhaften Ausgestaltung ist der Sicherheitsfalls durch Betätigung eines stationär angeordneten Notschalters, insbesondere als Lichtschranke ausgeführter Notschalter oder als Trittmatte ausgeführter Notschalter, auslösbar, insbesondere also der Normalbetrieb durch Betätigung eines stationär angeordneten Notschalters beendbar ist, insbesondere und in den Sicherheitsfall übergeht. Von Vorteil ist dabei, dass der Sicherheitsfall einfach auslösbar ist und trotzdem die Signalelektronik versorgt wird. Nur die Leistungszufuhr für den Antrieb wird vermindert, so dass der Antrieb kein Drehmoment erzeugt.

Bei einer vorteilhaften Ausgestaltung ist die Drehspannung vom öffentlichen Versorgungsnetz zur Verfügung gestellt. Von Vorteil ist dabei, dass eine Drehspannung mittels der Schleifleitungen und der Schleifabnehmer am Mobilteil übertragbar ist und somit ein Drehstrommotor versorgbar, so dass dieser in Drehbewegung versetzt und ein Drehmoment aufgebaut wird.

Bei einer vorteilhaften Ausgestaltung weist das Mobilteil für jede der Schleifleitungen jeweils mindestens einen Schleifabnehmer auf, wobei der jeweilige Schleifabnehmer die jeweilige Schleifleitung berührt. Von Vorteil ist dabei, dass die Drehspannung direkt übertragbar ist, insbesondere also kein Wandler zwischengeordnet werden muss.

Bei einer vorteilhaften Ausgestaltung weist das Mobilteil einen dritten und einen vierten Schütz auf,

deren Steuerspulen parallelgeschaltet und/oder aus der zwischen der ersten Schleifleitung und der zweiten Schleifleitung bestehenden Spannung versorgt sind,

insbesondere wobei mittels der Kontakte der Schütze ein Freigabesignal, insbesondere ein sicherheitsgerichtetes STO-Signal, erzeugbar und/oder dem Antrieb, insbesondere wechselrichtergespeister oder umrichtergespeister Elektromotor, zur Verfügung stellbar ist. Von Vorteil ist dabei, dass die Sicherheit erhöht ist, weil durch das Vermindern der Leistungszufuhr, also das Kurzschließen oder elektrische Verbinden der ersten mit der zweiten Schleifleitung, der dritte und vierte Schütz betätigt wird und hierdurch ein STO Signal an den Antrieb des Mobilteils weiterleitbar ist.

Bei einer vorteilhaften Ausgestaltung ist zwischen der zweiten und dritten Schleifleitung ein Datenstrom aufmoduliert, so dass auch im Sicherheitsfall eine Datenübertragung vom stationären Teil der Schienenanlage,
insbesondere vom Elektrogerät oder einer mit dem Elektrogerät verbundenen zentralen Steuerung der Schienenanlage, ausführbar ist. Von Vorteil ist dabei, dass eine erhöhte Sicherheit erreichbar ist, da im Sicherheitsfall die Abschaltinformation zusätzlich mittels des Datenstroms an das Mobilteil übertragbar ist. Auf diese Weise wird also im Sicherheitsfall einerseits die Leistungszufuhr durch Kurzschließen und/oder Zusammenschalten der ersten und zweiten Schleifleitung vermindert und andererseits ein Abschaltbefehl über den Datenstrom übertragen. Somit ist die Sicherheit erhöht, insbesondere da auch physikalisch verschiedene Medien für das redundante Abschalten verwendet werden.

Bei einer vorteilhaften Ausgestaltung weist die erste Schleifleitung mittels eines Widerstands mit elektrisch Masse oder mit der zweiten Schleifleitung verbunden,
insbesondere wobei der Widerstand kleiner ist als die Hälfte des Ohm'schen Widerstands der Steuerspule des dritten Schützes,
insbesondere wobei der dritte Schütz und der vierte Schütz identisch zueinander ausgebildet sind. Von Vorteil ist dabei, dass trotz der aus der zwischen dem ersten und zweiten Schleifleiter bestehenden Spannung versorgten Steuerspulen des dritten und vierten Schützes mittels des Widerstands die Spannung heruntergezogen wird zur elektrischen Masse hin oder zur zweiten Schleifleitung hin.

Weitere Vorteile ergeben sich aus den Unteransprüchen.

Die Erfindung wird nun anhand von schematischen Abbildungen näher erläutert:

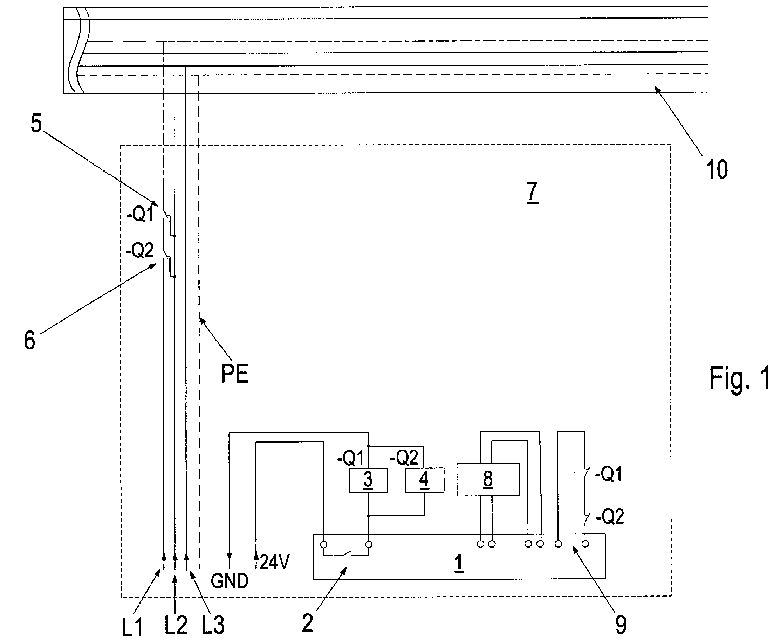

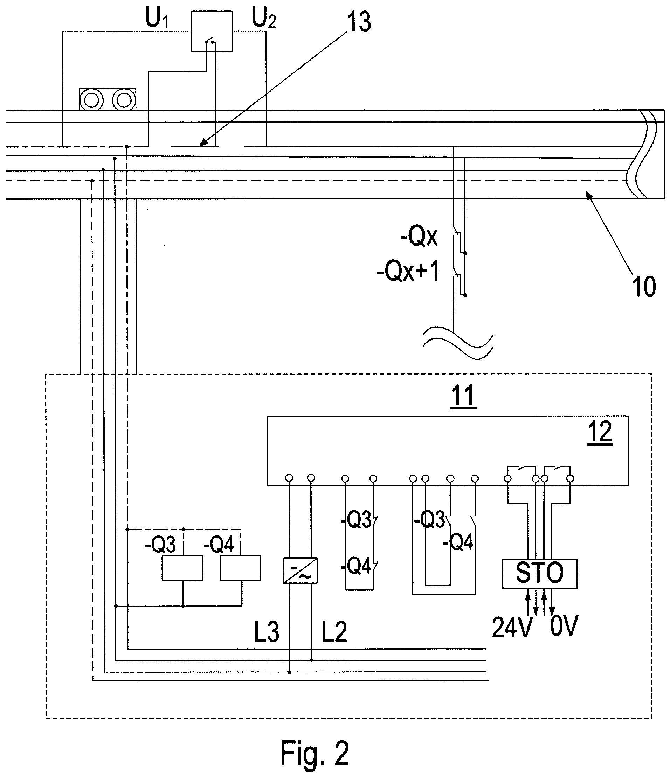

In der Figur 1 ist ein erster Teil und in Figur 2 ein zweiter Teil einer erfindungsgemäßen Schienenanlage dargestellt, die aus Schienenabschnitten zusammengesetzt ist, welche über Trennblöcke 13 voneinander abgegrenzt sind.

In einem ersten dieser Schienenabschnitte ist ein stationäres Elektrogerät 7, eine Schiene 10 mit Schleifleitungen und ein Mobilteil 11, insbesondere Schienenfahrzeug, angeordnet.

Wie in Figur 1 dargestellt, weist der Schienenabschnitt der Schienenanlage eine Schiene 10 auf, wobei parallel zur Schiene 10 Schleifleitungen verlaufen.

Wie in Figur 1 dargestellt, ist ein Mobilteil 11 entlang der Schiene bewegbar und weist Schleifabnehmer auf, so dass die über die Schleifleitungen bereit gestellte elektrische Leistung einem als Antrieb eingesetzten Elektromotor zuführbar ist.

Über die Schleifleitungen werden auf diese Weise dem Mobilteil 11 drei Phasen einer Drehspannung bereitgestellt. Daher sind zumindest drei Schleifleitungen vorgesehen, nämlich die drei Phasen L1, L2, L3.

Die Räder des Mobilteils 11 rollen auf der Schiene ab, so dass das Mobilteil 11 geführt ist von der Schiene und sich daher hin- oder herbewegen kann.

Das Mobilteil 11 weist eine Steuerung auf, die mit einer Gleichspannung, insbesondere 24 Volt, versorgt wird. Die Steuerung steuert den Elektromotor. Ebenso wie die Steuerung ist auch das in Figur 2 dargestellte Sicherheitsschaltgerät 12 aus der Gleichspannung versorgt, welche von einem Gleichrichter bereitgestellt wird, dessen wechselspannungsseitiger Anschluss von zwei Phasen (L2, L3) der Drehspannung speisbar ist. Die Steuerung wird also nicht aus allen drei Phasen L1 und L2 und L3 versorgt, sondern nur aus zwei Phasen (L2, L3).

Erfindungsgemäß weist das stationäre Elektrogerät 7 eine Schaltvorrichtung auf, um die für das Führen der ersten Phase L1 vorgesehene Schleifleitung, die im Folgenden auch als erste Schleifleitung bezeichnet wird, von der ersten Phase L1 abzutrennen und mit der zweiten Phase L2 der Drehspannung zu verbinden.

Im Mobilteil 11 werden die Steuerspulen eines dritten und eines vierten Schützes (Q3, Q4) aus der für die erste Phase L1 vorgesehenen Schleifleitung und aus der für die zweite Phase L2 vorgesehenen Schleifleitung gespeist.

Sobald aber der in Figur 1 gezeigte Sicherheitsfall eintritt, also der stationär angeordnete Notschalter 2 betätigt wird und somit die Steuerspule 3 eines ersten Schützes Q1 sowie die Steuerspule 4 eines zweiten Schützes Q2 stromlos werden, wird die für das Führen der ersten Phase L1 vorgesehene Schleifleitung abgetrennt von der ersten Phase L1 der Drehspannung und stattdessen mit der zweiten Phase L2 der Drehspannung verbunden.

Wie in Figur 2 gezeigt, wird dadurch aber auf dem Mobilteil 11 die Steuerspule des dritten Schützes Q3 und die Steuerspule des vierten Schützes Q4 nicht mehr versorgt und die Schütze Q3 und Q4 öffnen. Dies wird als STO Signal weitergegeben an die restliche Steuerung, so dass der Elektromotor des Mobilteils 11 in einen sicheren Zustand versetzt wird, insbesondere also abgeschaltet wird.

Außerdem ist durch das Wegfallen der ersten Phase L1 für das Mobilteil 11 die Eingangsspannung des Antriebssystems reduziert und somit auch die Leistungsversorgung. Auch schon von daher kann der Elektromotor nicht mehr die volle Antriebsleistung abgeben, insbesondere also nur ein für das Antreiben des Mobilteils 11 ungenügendes Drehmoment erzeugen.

Somit ist ein sicheres Abschalten des Antriebs des Mobilteils 11 im Sicherheitsfall erreicht.

Die Steuerspulen des ersten Schützes Q1 und des zweiten Schützes Q2 sind parallelgeschaltet. Der Umschaltkontakt des ersten Schützes Q1 und der Umschaltkontakt des zweiten Schützes Q2 sind miteinander in Reihe geschaltet. Somit ist sichergestellt, dass nur bei Umschalten beider Umschaltkontakte der beiden Schütze Q1 und Q2, also im Sicherheitsfall, die im Normalbetrieb für das Führen der ersten Phase L1 vorgesehene Schleifleitung mit der zweiten Phase L2 verbunden ist.

Wenn nur einer der beiden Umschaltkontakte der beiden Schütze Q1 oder Q2 betätigt wird, bleibt die im Normalbetrieb für das Führen der ersten Phase L1 vorgesehene Schleifleitung stromlos.

Wenn keiner der beiden Umschaltkontakte der beiden Schütze Q1 oder Q2 betätigt wird, bleibt die für das Führen der ersten Phase L1 vorgesehene Schleifleitung mit der ersten Phase L1 verbunden.

Wie in Figur 2 dargestellt sind zur elektrischen Trennung Trennblöcke 13 zwischen den Schienenabschnitten angeordnet. Jeder der Schienenabschnitte der Schienenanlage weist ein stationäres Elektrogerät 7 der oben beschriebenen Art auf, so dass in jedem Schienenabschnitt durch Betätigen des dortigen Notschalters, also im Sicherheitsfall, die jeweils für das Führen der ersten Phase L1 vorgesehene Schleifleitung mit der zweiten Phase L2 verbunden wird.

Diese Schleifleitung wird mittels eines jeweiligen Trennblocks 13 von der entsprechenden, im Normalbetrieb für das Führen der ersten Phase L1 vorgesehenen Schleifleitung getrennt. Eine Überwachungseinheit erfasst die Spannungen der jeweils zum Trennblock 13 benachbarten, jeweils im Normalbetrieb für das Führen der ersten Phase L1 vorgesehenen Schleifleitung des jeweiligen Schienenabschnitts und verbindet den Trennblock 13 nur dann mit einer der Schleifleitungen elektrisch, solange die erfassten Spannungen einander gleichende Spitzenwerte und/oder Effektivwerte aufweisen. Andernfalls bleibt der Trennblock stromlos, so dass das Mobilteil 11 gestoppt wird, wenn es den Trennblock 13 überfährt.

Somit ist die Sicherheit verbessert.

Das Mobilteil 11 ist im Normalbetrieb in der Lage, die gesamte Schienenanlage zu befahren, also alle Schienenabschnitte.

Bei weiteren erfindungsgemäßen Ausführungsbeispielen wird statt der ersten Phase L1 die zweite Phase L2 oder die dritte Phase verwendet, also die Phasen permutiert.

### Bezugszeichenliste

1 Sicherheitsschaltgerät
2 Notschalter
3 Steuerspule des ersten Schütz Q1
4 Steuerspule des zweiten Schütz Q2
5 Umschaltkontakt des ersten Schütz Q1
6 Umschaltkontakt des zweiten Schütz Q2
7 stationäres Elektrogerät
8 Not-Aus-Schalter
9 Auto-Start
10 Schiene mit Schleifleitungen
11 Mobilteil, insbesondere Schienenfahrzeug
12 Sicherheitsschaltgerät
13 Trennblock
Q1 erster Schütz
Q2 zweiter Schütz
Q3 dritter Schütz
Q4 vierter Schütz
L1 erste Phase der Drehspannung
L2 zweite Phase der Drehspannung
L3 dritte Phase der Drehspannung
GND elektrisch Masse

## Patentansprüche

1. Anlage mit elektrischem Verbraucher, insbesondere mit Antrieb, insbesondere mit wechselrichtergespeistem Elektromotor,
wobei die Anlage ein Elektrogerät (7) mit Schaltvorrichtung und den Verbraucher versorgende Leitungen, insbesondere Schleifleitungen, aufweist,
wobei eine erste der Leitungen im Normalbetrieb für das Führen der ersten Phase einer Drehspannung vorgesehen ist,
wobei eine zweite der Leitungen eine zweite Phase der Drehspannung führt,
wobei eine dritte der Leitungen eine dritte Phase der Drehspannung führt,
wobei der Verbraucher aus den Leitungen im Normalbetrieb mit Drehspannung versorgbar ist,
**dadurch gekennzeichnet, dass**
die Schaltvorrichtung derart geeignet ausgeführt ist, dass
- im Normalbetrieb die erste Leitung mit der ersten Phase der Drehspannung verbunden ist und
- dass im Sicherheitsfall die erste Leitung von der ersten Phase der Drehspannung abgetrennt und mit der zweiten Phase der Drehspannung verbunden wird oder ist.

2. Anlage nach Anspruch 1, wobei die Anlage eine Schienenanlage mit Schienenabschnitten, und der Verbraucher ein Mobilteil (11) ist,
wobei ein jeweiliger Schienenabschnitt ein Elektrogerät (7) mit Schaltvorrichtung, eine Schiene (10) und parallel dazu angeordnete Schleifleitungen als Leitungen aufweist,
wobei die erste der Leitungen eine erste der Schleifleitungen ist,
wobei die zweite der Leitungen eine zweite der Schleifleitungen ist,
wobei die dritte der Leitungen eine dritte der Schleifleitungen ist, und
wobei das Mobilteil (11) Schleifabnehmer aufweist, so dass ein Antrieb, insbesondere ein von einem Wechselrichter gespeister Elektromotor, des Mobilteils (11) aus den Schleifleitungen im Normalbetrieb mit Drehspannung versorgbar ist.

3. Anlage nach Anspruch 1 oder 2,
**dadurch gekennzeichnet, dass**
die Schaltvorrichtung zwei Schütze mit in Reihe geschalteten Umschaltkontakten aufweist, insbesondere wobei die Steuerspulen (3, 4) der beiden Schütze parallelgeschaltet sind, insbesondere wobei der Umschaltkontakt (5, 6) des zweiten Schützes entweder die erste Phase oder die zweite Phase der Drehspannung mit einer elektrischen Leitung verbindet und der Umschaltkontakt (5, 6) des ersten Schützes entweder die zweite Phase oder die elektrische Leitung mit der ersten Leitung verbindet.

4. Anlage nach einem der vorangegangenen Ansprüche, **dadurch gekennzeichnet, dass**
der Verbraucher eine Steuerung mit Sicherheitsschaltgerät (1, 12) aufweist,
wobei die Steuerung mit Sicherheitsschaltgerät (1, 12) von einem Gleichrichter versorgt wird, welcher aus der zwischen der zweiten und dritten Leitung bestehenden Spannung versorgt wird, insbesondere also aus der zwischen der zweiten Phase und der dritten Phase bestehenden Spannung.

5. Anlage nach Anspruch 2, oder nach einem der Ansprüche 3 oder 4, sowet dieser auf Anspruch 2 direkt oder indirekt rückbezogen ist,
**dadurch gekennzeichnet, dass**
zwischen den jeweiligen ersten Schleifleitungen der Schienenabschnitte ein jeweiliger Trennblock (13) angeordnet ist,
insbesondere der von einer Überwachungseinheit nur dann mit Spannung versorgt wird, wenn die von der Überwachungseinheit an den jeweiligen ersten Schleifleitungen erfassten Spannungen einander gleichende Spitzenwerte und/oder Effektivwerte aufweisen.

6. Anlage nach einem der vorangegangenen Ansprüche,
**dadurch gekennzeichnet, dass**
der Sicherheitsfall durch Betätigung eines stationär angeordneten Notschalters (2) auslösbar ist, insbesondere also der Normalbetrieb durch Betätigung eines stationär angeordneten Notschalters (2) beendbar ist, insbesondere und in den Sicherheitsfall übergeht,
insbesondere wobei der Notschalter (2) als Trittmatte oder als Lichtschranke oder als ein Lichtgitter aufweisende Lichtschrankenanordnung ausgeführt ist.

7. Anlage nach einem der vorangegangenen Ansprüche
**dadurch gekennzeichnet, dass**
die Drehspannung vom öffentlichen Versorgungsnetz, also öffentliches Wechselspannungsversorgungsnetz, zur Verfügung gestellt ist.

8. Anlage nach Anspruch 2, oder nach einem der Ansprüche 3 bis 7, soweit dieser Anspruch direkt oder indirekt auf Anspruch 2 rückbezogen ist,
**dadurch gekennzeichnet, dass**
das Mobilteil (11) für jede der Schleifleitungen jeweils mindestens einen Schleifabnehmer aufweist, wobei der jeweilige Schleifabnehmer die jeweilige Schleifleitung berührt.

9. Anlage nach Anspruch 2, oder nach einem der Ansprüche 3 bis 8, soweit dieser Anspruch direkt oder indirekt auf Anspruch 2 rückbezogen ist,
**dadurch gekennzeichnet, dass**
das Mobilteil (11) einen dritten und einen vierten Schütz aufweist, deren Steuerspulen (3, 4) parallelgeschaltet und/oder aus der zwischen der ersten Schleifleitung und der Schleifleitung bestehenden Spannung versorgt sind,
insbesondere wobei mittels der Kontakte der Schütze ein Freigabesignal, insbesondere ein sicherheitsgerichtetes STO-Signal, erzeugbar und/oder dem Antrieb zur Verfügung stellbar ist.

10. Anlage nach Anspruch 2, oder nach einem der Ansprüche 3 bis 9, soweit dieser Anspruch direkt oder indirekt auf Anspruch 2 rückbezogen ist,
**dadurch gekennzeichnet, dass**
zwischen der zweiten und dritten Schleifleitung ein Datenstrom aufmoduliert ist, so dass auch im Sicherheitsfall eine Datenübertragung vom stationären Teil der Schienenanlage,
insbesondere vom Elektrogerät (7) oder einem mit dem Elektrogerät (7) verbundenen zentralen Steuerung der Schienenanlage, ausführbar ist.

11. Anlage nach einem der vorangegangenen Ansprüche,
**dadurch gekennzeichnet, dass**
die erste Leitung mittels eines Widerstands mit der zweiten Leitung oder mit elektrisch Masse, also elektrisch Erde, verbunden ist,
insbesondere wobei der Widerstand kleiner ist als die Hälfte des Ohm'schen Widerstands der Steuerspule (3, 4) des dritten Schützes,
insbesondere wobei der dritte Schütz und der vierte Schütz identisch zueinander ausgebildet sind.

## Claims

1. A system having an electrical consumer, in particular having a drive, in particular having an electric motor fed by an inverter,
wherein the system has an electrical device (7) having a switchgear and lines supplying the consumer, in particular conductor lines,
wherein a first of the lines is provided to conduct the first phase of a three-phase voltage in normal operation,
wherein a second of the lines conducts a second phase of the three-phase voltage,
wherein a third of the lines conducts a third phase of the three-phase voltage,
wherein the consumer can be supplied with three-phase voltage from the lines in normal operation,
**characterised in that**
the switchgear is configured such that
- the first line is connected to the first phase of the three-phase voltage in normal operation and
- in the safety situation, the first line is being separated or is separated from the first phase of the three-phase voltage and is being connected or is connected to the second phase of the three-phase voltage.

2. A system according to claim 1, wherein the system is a rail system with rail portions and the consumer is a mobile part (11),
wherein a respective rail portion has an electrical device (7) with switchgear, a rail (10) and conductor lines arranged parallel thereto as lines,
wherein the first of the lines is a first of the conductor lines,
wherein the second of the lines is a second of the conductor lines,
wherein the third of the lines is a third of the conductor lines, and
wherein the mobile part (11) has collectors, so that a drive, in particular an electric motor fed by an inverter, of the mobile part (11) can in normal operation be supplied with three-phase voltage from the conductor lines.

3. A system according to claim 1 or 2,
**characterised in that**
the switchgear has two contactors with change-over contacts connected in series, in particular wherein the control coils (3, 4) of the two contactors are connected in parallel, in particular wherein the change-over contact (5, 6) of the second contactor connects either the first phase or the second phase of the three-phase voltage to an electrical line and the change-over contact (5, 6) of the first contactor connects either the second phase or the electrical line to the first line.

4. A system according to any one of the preceding claims,
**characterised in that**
the consumer has a control means with safety switchgear (1, 12),
wherein the control means with safety switchgear (1, 12) is supplied by a rectifier which is supplied from the voltage present between the second and third line, in particular therefore from the voltage present between the second phase and the third phase.

5. A system according to claim 2, or according to any one of claims 3 and 4 insofar as this [claim] is directly or indirectly dependent on claim 2,
**characterised in that**
a respective isolating block (13) is arranged between the respective first conductor lines of the rail portions, in particular which is only supplied with voltage by a monitoring unit when the voltages detected at the respective first conductor lines by the monitoring unit have peak values and/or root mean square values similar to one another.

6. A system according to any one of the preceding claims,
**characterised in that**
the safety situation can be triggered by actuation of an emergency switch (2) arranged in a stationary manner, in particular therefore the normal operation can be ended by actuation of an emergency switch (2) arranged in a stationary manner, in particular and transitions into the safety situation, in particular wherein the emergency switch (2) is in the form of a pressure mat or in the form of a light barrier or in the form of a light barrier arrangement with a light curtain.

7. A system according to any one of the preceding claims,
**characterised in that**
the three-phase voltage is provided from the public supply network, therefore public alternating voltage supply network.

8. A system according to claim 2, or according to any one of claims 3 to 7 insofar as this claim is directly or indirectly dependent on claim 2,
**characterised in that**
the mobile part (11) has in each case at least one collector for each of the conductor lines, wherein the respective collector contacts the respective conductor line.

9. A system according to claim 2, or according to any one of claims 3 to 8 insofar as this claim is directly or indirectly dependent on claim 2,
**characterised in that**
the mobile part (11) has a third and a fourth contactor, whose control coils (3, 4) are connected in parallel and/or are supplied from the voltage present between the first conductor line and the conductor line, in particular wherein an enable signal, in particular a safety-oriented STO signal, can be generated and/or can be provided to the drive by means of the contacts of the contactor.

10. A system according to claim 2, or according to any one of claims 3 to 9 insofar as this claim is directly or indirectly dependent on claim 2,
**characterised in that**
a data stream is modulated-on between the second and third conductor line, so that a data communication from the stationary part of the rail system, in particular from the electrical device (7) or from a central control means, connected to the electrical device (7), of the rail system can also be carried out in the safety situation.

11. A system according to any one of the preceding claims,
**characterised in that**
the first line is connected to the second line or to electrical ground, therefore electrical earth, by means of a resistor, in particular wherein the resistance is less than half the ohmic resistance of the control coil (3, 4) of the third contactor,
in particular wherein the third contactor and the fourth contactor are identical to one another.

## Revendications

1. Installation comportant un consommateur électrique, en particulier un entraînement, en particulier un moteur électrique alimenté par onduleur,
l'installation présentant un appareil électrique (7) avec un dispositif de commutation et des lignes alimentant le consommateur, en particulier des lignes de contact,
une première des lignes étant prévue, en fonctionnement normal, pour conduire la première phase d'une tension triphasée,
une deuxième des lignes conduisant une deuxième phase de la tension triphasée,
une troisième des lignes conduisant une troisième phase de la tension triphasée,
le consommateur pouvant être alimenté en tension triphasée à partir des lignes en fonctionnement normal,
**caractérisée en ce que**
le dispositif de commutation est réalisé de telle sorte que :
- en fonctionnement normal, la première ligne est reliée à la première phase de la tension triphasée et que,
- dans un cas de sécurité, la première ligne devient ou est séparée de la première phase de la tension triphasée et reliée à la deuxième phase de la tension triphasée.

2. Installation selon la revendication 1, l'installation étant une installation à rail avec des tronçons de rail et le consommateur étant une partie mobile (11),
un tronçon de rail respectif présentant un appareil électrique (7) avec dispositif de commutation, un rail (10) et des lignes de contact disposées parallèlement à celui-ci en tant que lignes,
la première des lignes étant une première des lignes de contact,
la deuxième des lignes étant une deuxième des lignes de contact,
la troisième des lignes étant une troisième des lignes de contact, et
la partie mobile (11) présentant des collecteurs de contact, de sorte qu'un entraînement, en particulier un moteur électrique alimenté par onduleur, de la partie mobile (11) peut être alimenté en tension triphasée à partir des lignes de contact en fonctionnement normal.

3. Installation selon la revendication 1 ou 2,
**caractérisée en ce que**
le dispositif de commutation présente deux contacteurs avec des contacts de commutation montés en série,
en particulier les bobines de commande (3, 4) des deux contacteurs étant montées en parallèle,
en particulier le contact de commutation (5, 6) du deuxième contacteur reliant soit la première phase, soit la deuxième phase de la tension triphasée à une ligne électrique et le contact de commutation (5, 6) du premier contacteur reliant soit la deuxième phase, soit la ligne électrique à la première ligne.

4. Installation selon l'une des revendications précédentes,
**caractérisée en ce que**
le consommateur présente une commande avec appareil de commutation de sécurité (1, 12), la commande avec appareil de commutation de sécurité (1, 12) étant alimentée par un redresseur qui est alimenté par la tension existant entre la deuxième et la troisième ligne, donc en particulier par la tension existant entre la deuxième phase et la troisième phase.

5. Installation selon la revendication 2, ou selon l'une des revendications 3 ou 4 dans la mesure où celle-ci se réfère directement ou indirectement à la revendication 2,
**caractérisée en ce**
**qu'**un bloc de séparation respectif (13) est disposé entre les premières lignes de contact respectives des tronçons de rail, lequel n'est en particulier alimenté en tension par une unité de surveillance que lorsque les tensions détectées par l'unité de surveillance sur les premières lignes de contact respectives présentent des valeurs de crête et/ou des valeurs efficaces identiques.

6. Installation selon l'une des revendications précédentes,
**caractérisée en ce que**
le cas de sécurité peut être déclenché par l'actionnement d'un interrupteur d'urgence (2) disposé de manière stationnaire, en particulier donc le fonctionnement normal peut être interrompu par l'actionnement d'un interrupteur d'urgence (2) disposé de manière stationnaire, en particulier et se transforme en cas de sécurité,
en particulier l'interrupteur d'urgence (2) étant réalisé sous la forme d'un tapis sensible ou d'une barrière lumineuse ou d'un agencement de barrière lumineuse présentant une grille lumineuse.

7. Installation selon l'une des revendications précédentes,
**caractérisée en ce que**
la tension triphasée est mise à disposition par le réseau d'alimentation public, donc le réseau d'alimentation public en tension alternative.

8. Installation selon la revendication 2, ou selon l'une des revendications 3 à 7 dans la mesure où cette revendication se réfère directement ou indirectement à la revendication 2, **caractérisée en ce que**
la partie mobile (11) présente pour chacune des lignes de contact au moins un collecteur de contact, le collecteur de contact respectif étant en contact avec la ligne de contact respective.

9. Installation selon la revendication 2, ou selon l'une des revendications 3 à 8 dans la mesure où cette revendication se réfère directement ou indirectement à la revendication 2, **caractérisée en ce que**
la partie mobile (11) présente un troisième et un quatrième contacteur dont les bobines de commande (3, 4) sont montées en parallèle et/ou sont alimentées par la tension existant entre la première ligne de contact et la ligne de contact,
en particulier un signal de libération, en particulier un signal STO de sécurité, pouvant être généré au moyen des contacts des contacteurs et/ou mis à disposition de l'entraînement.

10. Installation selon la revendication 2, ou selon l'une des revendications 3 à 9 dans la mesure où cette revendication se réfère directement ou indirectement à la revendication 2, **caractérisée en ce**
**qu'**un flux de données est modulé entre la deuxième et la troisième ligne de contact, de sorte que, même dans le cas de sécurité, une transmission de données peut être réalisée par la partie stationnaire de l'installation à rail, en particulier par l'appareil électrique (7) ou par une commande centrale de l'installation à rail reliée à l'appareil électrique (7).

11. Installation selon l'une des revendications précédentes,
**caractérisée en ce que**
la première ligne est reliée à la deuxième ligne ou à la masse électrique, donc la terre électrique, au moyen d'une résistance,
en particulier la résistance étant inférieure à la moitié de la résistance ohmique de la bobine de commande (3, 4) du troisième contacteur,
en particulier le troisième contacteur et le quatrième contacteur étant conçus de manière identique.
